# EUROPEAN PATENT SPECIFICATION

(11) **EP 3 156 825 B1**
(45) Date of publication and mention of the grant of the patent: **29.08.2018**
(21) Application number: 15190306.9
(22) Date of filing: 16.10.2015
(51) Int. Cl.: G01S 17/89, G01S 7/481

(54) **DIMENSIONING SYSTEM WITH MULTIPATH INTERFERENCE MITIGATION**
DIMENSIONIERUNGSSYSTEM MIT MEHRWEGSTÖRUNGSVERMINDERUNG
SYSTÈME DE DIMENSIONNEMENT AVEC ATTÉNUATION D'INTERFÉRENCES MULTIVOIES

(43) Date of publication of application: 19.04.2017
(73) Proprietor: Hand Held Products, Inc., Fort Mill, SC 29707 (US)
(72) Inventor: THURIES, Serge, Morris Plains, NJ New Jersey 07950 (US); GILLET, Alain, Morris Plains, NJ New Jersey 07950 (US); LAFFARGUE, Franck, Morris Plains, NJ New Jersey 07950 (US)
(74) Representative: Houghton, Mark Phillip

(56) References cited:
- US-A1- 2005 264 867
- US-A1- 2013 201 288
- US-A1- 2014 347 553
- Mike Stensvold: "Get The Most Out Of Variable Aperture Lenses | OutdoorPhotographer.com", , 7 December 2010 (2010-12-07), XP055248563, Retrieved from the Internet: URL:http://www.outdoorphotographer.com/gea r/lenses/get-the-most-out-of-variable-aper ture-lenses.html#.Vrmo5mOwV0U [retrieved on 2016-02-09]
- NEIL COLLINGS ET AL: "The Applications and Technology of Phase-Only Liquid Crystal on Silicon Devices", JOURNAL OF DISPLAY TECHNOLOGY, IEEE SERVICE CENTER, NEW YORK, NY, US, vol. 7, no. 3, 1 March 2011 (2011-03-01), pages 112-119, XP011329518, ISSN: 1551-319X, DOI: 10.1109/JDT.2010.2049337

## Description

### FIELD OF THE INVENTION

The present invention relates to dimensioning systems, more specifically to a time-of-flight optical dimensioning system with reduced multipath interference.

### BACKGROUND

Generally speaking the physical size of objects (i.e., an object's dimensions) may be measured automatically and without contact with a dimensioning system. These dimensioning systems typically rely on a range sensor to determine the range of points on an item. The item's size may then be computed by comparing the range of the individual points on the item. The range sensor may use ultrasonic, radio-frequency (RF), or optical signals to detect range. One such optical range sensor employs time-of-flight (TOF) measurements to measure range.

Patent document number US2013/201288A1 describes a high dynamic range and depth of field depth camera. In order to maximize the dynamic range and depth of field for a depth camera used in a time of flight system, the light source is modulated at a plurality of different frequencies, a plurality of different peak optical powers, a plurality of integration subperiods, a plurality of lens foci, aperture and zoom settings during each camera frame time. The different sets of settings effectively create subrange volumes of interest within a larger aggregate volume of interest, each having their own frequency, peak optical power, lens aperture, lens zoom and lens focus products consistent with the distance, object reflectivity, object motion, field of view, etc. requirements of various ranging applications.

Patent document number US2005/264867A1 describes a beam focusing and scanning system using a micromirror array lens (optical system) which includes a light source configured to emit light and a micromirror array lens, including at least one micromirror, optically coupled to the light source, configured to reflect the light onto a projection medium (projection plane). The optical system also includes at least one actuating component coupled to the at least one micromirror, configured to move the at least one micromirror to enable the at least one micromirror to focus the light on the projection medium.

Mike Stensvold describes changing the physical aperture diameter of variable aperture lenses ["Get The Most Out Of Variable Aperture Lenses; www.outdoorphotographer.com", 7 December 2010].

The time-of-flight (TOF) sensors offer advantages over other optical range sensors (e.g., structured light or stereo vision). One advantage of the TOF sensor is its simplicity. There are no moving parts, and the entire system may be made compact, as there are no special geometries required for sensing range. Also, the sensing and calculation of the range is relatively straight forward and requires small amount of processing power compared to other sensors. This implies a reduced power requirement and could lead to a faster dimensioning result. These advantages make TOF dimensioning systems better suited for non-fixed (i.e., mobile or handheld) dimensioning applications.

The TOF dimensioning system is not without its limitations, however. For example, a TOF sensor senses the range of an item of interest by first illuminating a scene (i.e., field of view) with a beam of light. If the field of view is large compared to the item of interest, then the light beam may reach the item of interest along several different paths. Some paths, for example, may be experience one or more reflections prior to reaching the item of interest. This is known as multipath and leads to a distorting in the range measurement, which in turn leads to dimensioning errors. Light from a reflected path may suggest that the distance to the item of interest (*i.e.,* range) is greater than the actual physical distance. Some means of controlling the multipath distortion is necessary.

Controlling the environment that an item of interest is measured in is one approach. Here, reflections from the background may be minimized and the placement of items may carefully controlled. In addition, the size and shape of items may be constrained. While these measures might work for a fixed installation, it would not be practical for most mobile dimensioning applications (*e.g.,* package delivery and pickup). In these applications, neither the environment (*e.g.,* warehouse) nor the item of interest (*e.g.,* the package) may be controlled.

A general need exists for a dimensioning system suitable for mobile environments. A time-of-flight (TOF) dimensioning system are suitable but may suffer from multipath distortion. A specific need, therefore, exists for a TOF dimensioning system with adaptable multipath interference suppression to facilitate the accurate dimensioning of a variety of items in a variety of environments.

### SUMMARY

The present invention in its various aspects is as set out in the appended claims.

Accordingly, in one aspect, the present invention embraces a time-of-flight (TOF) dimensioning system. The TOF dimensioning system includes an illumination subsystem configured to generate and project a light beam along an optical axis toward an item of interest. The light beam's spatial extent in a plane transverse to the optical axis is limited by an adjustable aperture. The TOF dimensioning system further includes an imager positioned and configured to capture images of the item of interest. The system also includes a TOF sensor positioned and configured to capture range images from the light beam as reflected from the item of interest. A control subsystem is further included as part of the TOF dimensioning system. The control subsystem is communicatively coupled to the adjustable aperture, the imager, and the TOF sensor and is configured (i) to determine, from the captured images, an illumination region corresponding to the item of interest (ii) to configure the adjustable aperture's size, shape, and/or position to conform with the illumination region, and (iii) to determine an at least approximate dimension measurement of the item of interest.

According to the invention, the time-of-flight (TOF) dimensioning system's light beam substantially illuminates the illumination region and substantially reaches the item of interest without first being reflected.

In an exemplary embodiment, the time-of-flight (TOF) dimensioning system's dimension measurement is a volume.

In another aspect, the present invention embraces a time-of-flight (TOF) dimensioning system. The TOF dimensioning system includes a light source for generating light. The TOF dimensioning system also includes an optical subassembly positioned in front of the light source. The optical subassembly is configured to project a light beam along an optical axis toward an item of interest. An adjustable aperture is included in the illumination subsystem and is positioned along the optical axis between the optical subassembly and the item of interest. The adjustable aperture includes a blocking region for blocking at least a portion of the light beam. The blocking region's size, shape, and position are controllable. The TOF dimensioning system includes an imager positioned and configured for capturing images of the item of interest. A control subsystem communicatively coupled to the adjustable aperture and the imager, is also including in the TOF dimensioning system. The control subsystem is configured to determine, from the captured images, an illumination region corresponding to the item of interest's size, shape, and position. The control subsystem is further configured to control the adjustable aperture's blocking region so that light from the light source substantially illuminates the illumination region and substantially reaches the item of interest without first being reflected.

In an exemplary embodiment, the TOF dimensioning system's light source is a laser.

In another exemplary embodiment, TOF dimensioning system's optical subassembly includes a diffractive optical element (DOE).

In another exemplary embodiment, the TOF dimensioning system's adjustable aperture comprises a liquid crystal display (LCD) screen.

In yet another aspect, the present invention embraces a method for reducing multipath distortion in a time-of-flight (TOF) dimensioning system. The method includes the steps of capturing an image of an item of interest, and determining from the image, an illumination region corresponding to the item of interest. The method also includes the step of adjusting an adjustable aperture. The adjustable aperture is positioned in front of a light source so a light beam directed at the item of interest substantially illuminates the illumination region and substantially reaches the item of interest without first being reflected.

The foregoing illustrative summary, as well as other exemplary objectives and/or advantages of the invention, and the manner in which the same are accomplished, are further explained within the following detailed description and its accompanying drawings.

### BRIEF DESCRIPTION OF THE DRAWINGS

Figure 1 graphically depicts an exemplary time-of-flight dimensioning system with multipath illumination.
Figure 2 graphically depicts an exemplary time-of-flight dimensioning system with no multipath illumination.
Figure 3a graphically depicts an exemplary time-of-flight dimensioning system before aperture adjustment.
Figure 3b graphically depicts an exemplary time-of-flight dimensioning system after aperture adjustment.
Figure 4 schematically depicts a block diagram of an exemplary time-of-flight dimensioning system.
Figure 5 schematically depicts a flowchart illustrating an exemplary method for time-of-flight dimensioning, the method including the steps for reducing multipath distortion.

### DETAILED DESCRIPTION

The present invention embraces a system and method for mitigating multipath distortion from a time-of-flight (TOF) dimensioning system. The TOF dimensioning system is for the measurement of linear or volume dimensions. The TOF dimensioning system obtains the relative positions of points within a field of view by measuring the time it takes for a pulsed beam of light to travel a distance (*e.g.,* the distance of a path from the TOF dimensioning system, to an object, and then back to the TOF dimensioning system).

An TOF dimensioning system 1 may use an illumination subsystem 40 to project a beam of light 3 (*i.e.,* light beam) along an optical axis 5 toward an item of interest 2 (*e.g.,* a package). The light beam 3 may be visible or in visible and is typically amplitude modulated, forming a pulse or pulses. The pulsed light beam illuminates the scene and is reflected by objects back to the dimensioning system's TOF sensor subsystem 45.

A typical TOF sensor subsystem 45 may include a TOF lens 46 to image the field of view onto a two-dimensional sensor (*i.e.,* TOF sensor 47) with a plurality of photoelectric elements (*i.e.,* pixels), each converting a small portion of the reflected light beam into an electronic signal. The resulting signal from each pixel is a pulse train. When the pixel's signal (*i.e.,* the pulse train) is compared to the transmitted signal (*i.e.,* the pulsed light beam's modulating signal), a phase shift between pulses may be measured. This phase shift represents the transit time (*i.e.,* time-of-flight) of the light. What results from the TOF sensor subsystem 45 is a range image with pixels corresponding to range. The range images may be transmitted to a control subsystem 60 where they are used by software running on a processor 62 to compute various dimension measurements *(e.g.,* volume or linear dimension).

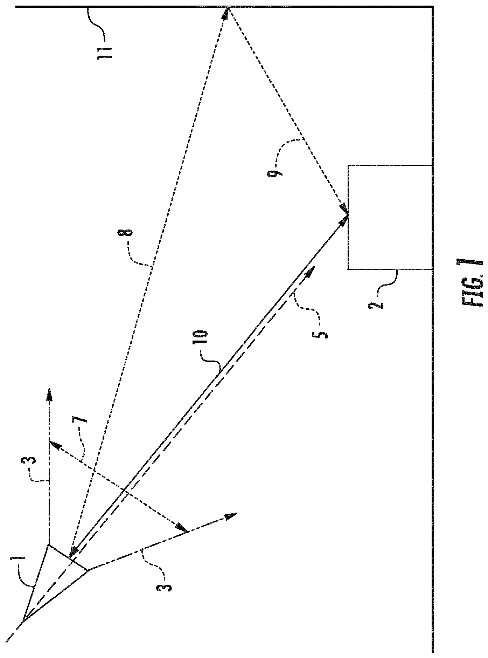

A pixel in a TOF sensor may receive light that has travelled along different optical paths (*e.g.,* reflected paths) prior to reaching a particular point on an object. The reflected (*i.e.,* multipath) light has a phase shift (*i.e.,* time difference between the reflected modulating signal and the transmitted modulated signal) that differs from the phase shift of light traveling along a direct path (*i.e.,* light that has experienced no reflection prior to reaching the item of interest). When multipath light is present, the different phase shifted signals at each pixel combine and lead to an ambiguous range calculation. This phenomenon, known as multipath distortion, may cause errors in dimensioning or may even render a dimension measurement impossible. Figure 1 demonstrates multipath distortion.

As shown in Figure 1, a time-of-flight dimensioning system 1 (*i.e.,* TOF dimensioner) may emit a light beam 3 toward an item of interest 2. Typically, the center of the light beam 3 is aligned with an optical axis 5 that is collinear with the direct path between the item of interest 2 and the TOF dimensioner 1. The size, shape, position, and intensity-distribution of the light beam 3 in this transverse plane is known as the illumination pattern. The illumination pattern may be square, polygonal shapes (*e.g.,* hexagonal, octagonal, rhombus, U-shaped), or non-polygonal shapes (*e.g.,* circular, oval). The shape and center of the illumination pattern is important in so far as all points on the item of interest 2 are illuminated by the light beam 3. Problems arise, however when the spatial extent 7 of the light beam 3 is much larger than the item of interest 2. Here, some of the light-beam's rays may reflect from other objects before reaching the item of interest 2.

Figure 1 demonstrates multipath radiation by tracing the path of one such ray. Here, a transmitted ray 8 reflects from the environment 11 (*e.g.,* a wall). The ray travels along the reflected path 9 and reaches a point on the item of interest 2. The ray is then reflected back to the TOF dimensioner 1 along the direct path 10. At the same time, a different ray is transmitted along the direct path 10 and reflected back to the TOF dimensioner 1 along the same path 10. Since both rays reach the TOF dimensioner 1 from the same point but have travelled different distances, errors may arise in the calculation of the range. The ray tracing paths 8,9, and 10 in Figure 1 (*i.e.,* the multipath ray) experiences a longer time-of-flight than the ray tracing the back-and-forth direct path 10 between the TOF dimensioner and the item of interest. As a result, two ranges for the same point may be calculated. This ambiguity is multipath distortion, and leads to errors in dimensioning.

Minimizing multipath illumination may be accomplished, to some degree, by limiting the size/shape of items of interest 2 or by controlling the reflective environment 11 (*e.g.,* reducing reflections). Neither of these alternatives, however, is practical for mobile dimensioning applications (*e.g.,* measuring the volume of packages prior to shipping). In mobile applications, the environment varies and is typically uncontrollable. In addition, a package's size/shape may be very diverse. What is more, dimensioning in mobile applications should be fast and accurate. For a TOF dimensioning system to be fast and accurate and still be suitable mobile dimensioning applications the multipath interference must be measured and controlled. The resulting system must be relatively simple so as not to undermine the aforementioned simplicity associated with TOF dimensioning systems. Embodied in the present disclosure is a system and method for mitigating the negative effects of multipath interference in a time-of-flight dimensioning system. The mitigation results from limiting the spatial extent of the illumination based on analysis of the environment prior to time-of-flight dimensioning.

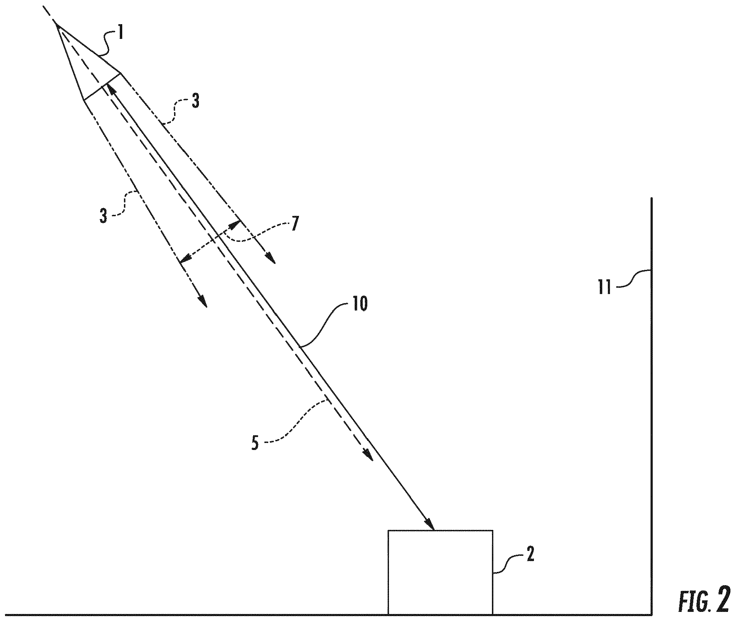

Figure 2 graphically depicts a time-of-flight dimensioning system with no multipath illumination. In contrast to the embodiment in Figure 1, this embodiment has no reflections from the background environment 11. The lack of multipath reflections arises from the light beam's 3 spatial extent 7 being limited to encompass the item of interest 2 and to not include the background environment 11. The ray projected from the TOF dimensioning system and following the direct path 10 reflects back to the TOF dimensioning system along the same path. There are no other rays reflecting back to the TOF dimensioning system along this path and from this point on the item of interest 2. As a result, multipath distortion is eliminated. Thus, a method to eliminate multipath interference must limit the spatial extent of the illumination so it illuminates the item of interest without first being reflected. Since many different items of interest may be dimensioned, such a method must adapt to a wide range of items of interest regardless of their size, shape, and position.

The time of flight dimensioning system includes an illumination subsystem. This subsystem uses a light source 20 and the associated driver circuitry to generate a light beam 3. The light source 20 may be a laser diode or light emitting diode (i.e., LED), and may radiate at a wavelength within the ultraviolet, visible, or infrared regions of the spectrum. The light source 20 may be filtered, polarized, collimated, or focused by an optical subassembly 25 positioned in front of the light source 20 to receive its radiation. The optical assembly 25 may include optical filters, polarizers, lenses, or other components to form and shape the light into a light beam projected along the optical axis 5 toward the item of interest 2. To limit the spatial extent 7 of the light beam 3, an adjustable aperture 30 is positioned along the optical axis between the optical subassembly and the item of interest. The adjustable aperture 30 blocks a portion of light in a blocking region. The size, shape, and position of the adjustable aperture's blocking region is controlled so the illumination substantially 40 illuminates the item of interest 2 and does not illuminate other objects (*e.g.,* other items situated close to the item of interest) or the background environment 11 (*e.g.,* a wall).

The adjustable aperture 30 may be embodied in several ways. An electrically addressed spatial light modulator (EASLM) such as a liquid crystal display (LCD) device may be used as the adjustable aperture 30 of the illumination subsystem of the TOF dimensioning system. The LCD device may take any of a large variety of forms. The LCD device may include a 2 dimensional array of electrically controlled liquid crystal cells, an output polarizing filter, and a front panel (*e.g.,* glass). The light beam 3 from the light source 20 may be polarized depending on which light source is used. If a laser is used, then an input polarizing filter may or may not be necessary, however if an unpolarized light source (*e.g.,* LED) is used, then the LCD device should include an input polarizing filter. The LCD device uses the polarizing filters and the rotation of the light-beam's polarization as it passes through the liquid crystal cell to control the light beam's illumination pattern. In this way, various blocking regions may be configured, or in other words, the aperture's size, shape, and/or position may be adjusted.

Another possible embodiment of the adjustable aperture 30 uses a liquid crystal on silicon (*i.e.,* LCoS) device to control (*i.e.,* pass or block) the light beam in the plane transverse to the optical axis 5. The LCoS device is like the LCD display because it relies on the polarization control provided by an array of electronically controlled liquid cells. Unlike the LCD, which controls the transmission of a light beam, the LCoS device controls the reflection of light off a reflective backplane coated with a liquid crystal layer.

Another possible embodiment for the adjustable aperture 30 uses a digital micro-mirror device (DMD) to control the light beam 30 in the plane transverse to the optical axis 5. The DMD device uses an array of micro-mirrors to reflect portions of the light beam selectively. The array of micro-mirrors may include, for example, one hundred thousand aluminum micro-mirrors, each with a diameter or approximately 16 µm. Each micro-mirror may be mechanically positioned in an ON or OFF state. In the ON state, for example the light is reflected in such a way that it reaches the item of interest. In the OFF state, however the light is reflected in such a way so that it does not reach the item of interest. In this way, the DMD device may produce two-dimensional illumination patterns.

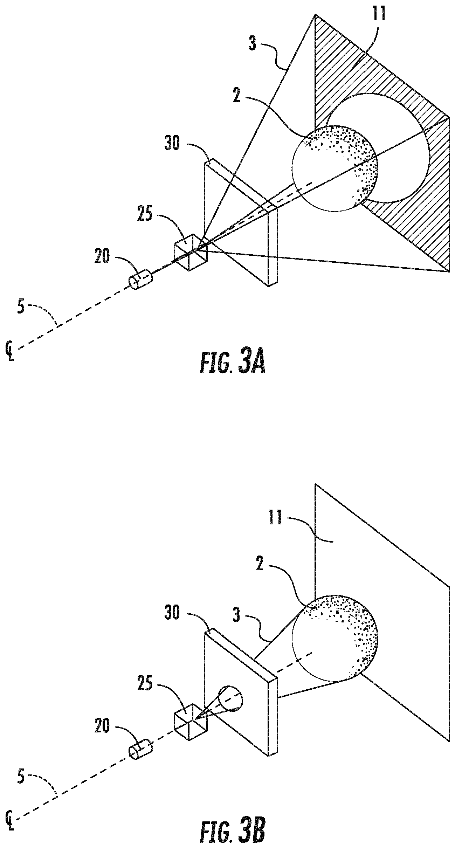

Figure 3a graphically depicts an exemplary illumination subsystem for an optical dimensioning system. The subsystem includes components positioned along and centered on an optical axis 5. The subsystem includes a light source 20 (*e.g.,* laser) that generates the pulsed light for measuring time of flight. The light is formed and shaped into a light beam 3 (*e.g.,* collimated light) by an optical subassembly 25 (*e.g.,* diffractive optical element) positioned in front of the light source. The light beam is then modified by the adjustable aperture 30 (*e.g.,* LCD display device) that controls the size, shape, and position (with respect to the optical axis) of the light beam (*i.e.,* illumination pattern). In Figure 3a, there is no adjustment of the spatial extent of the light beam and as a result, the light reaches the item of interest 2 and the background 11. In contrast to Figure 3a, Figure 3b illustrates the illumination subsystem's adjustable aperture 30 configured to control the light beam 3 so it only illuminates the object 2.

To control the adjustable aperture there must some goal size, shape and position. Here the goal is to configure the adjustable aperture so the item of interest is exclusively illuminated. In other words, the size, shape, and position of the item of interest must first be obtained before the adjustable aperture is configured and before TOF dimensioning is executed. Without this information, the adjustable aperture cannot be adjusted properly.

Pervious approaches attempted to perform the illumination adjustment by sensing errors in raw TOF sensor data and then adjusting the illumination to minimize these errors. The details of this approach were published in "Time of Flight Measurement Error Reduction Method and Apparatus" on January 2, 2014 (i.e., US 20140002828 A1) which is incorporated herein by reference in its entirety. The present invention uses a different approach. Here the size, shape, and position of the item of interest is detected by an imager positioned and configured for capturing images of the item of interest. The geometric details are then derived using machine vision algorithms running on a processor (*e.g.,* a digital signal processor (DSP)) and provided to a control subsystem 60 to configure the adjustable aperture's 30 transparent and opaque (*i.e.,* blocking) regions.

The imager 50 is typically a digital camera system that may include a lens and a photoelectric sensor. A imaging lens 52 is typically used but this could be any optical element that could create a real image of a field of view (*e.g.,* mirror). The photoelectric sensor (*i.e.,* image sensor 53) typically includes a plurality of photoelectric sensors arranged as a two-dimensional array of pixels. The pixels (and associated circuitry) convert the real image of the field of view into an electronic signal. The image sensor 53 may use a charge coupled device (*i.e.,* CCD), a complementary-metal-oxide-semiconductor (*i.e.,* CMOS) sensor, or another sensing technology to suit the application. For example, the sensor material could be selected for sensitivity in the ultraviolet (UV), visible (VIS), or infrared (IR) regions of the spectrum and the images produced could be gray scale or color.

In some embodiments, the imager 50 may be a part of a larger system. For example, the imager 50 could be part of an indicia reading system (*e.g.,* handheld barcode reader), and in this way, could provide images for indicia reading and to facilitate illumination control in a TOF dimensioning system.

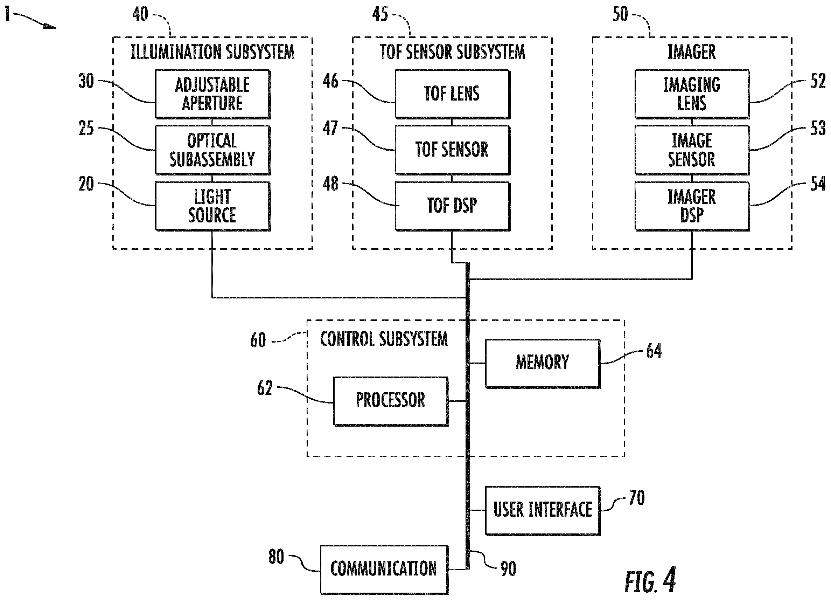

Figure 4 schematically depicts a block diagram of an exemplary time-of-flight dimensioning system 1. The dimensioning system 1 includes an imager 50. The imager 50 is positioned and configured to capture images of the item of interest 2. The imager 50 includes an imaging lens 52 to form a real image of a field of view (including the item of interest) onto an image sensor 53. The image sensor 53 is configured to convert the real image into an electronic signal that is transmitted to an imager digital signal processor 54 (*i.e.,* DSP) that creates a digital image of the item of interest and its background environment. In some possible embodiments, the imager DSP performs image processing to modify the capture images to facilitate the calculation of the item-of-interest's size, shape, and/or position.

A control subsystem 60 is communicatively coupled to the imager via an interconnection system (*e.g.,* bus) 90, which interconnects all of the TOF dimensioning system's subsystems. The control subsystem 60 includes one or more processors 62 (*e.g.,* one or more controllers, digital signal processor (DSP), application specific integrated circuit (ASIC), programmable gate array (PGA), and/or programmable logic controller (PLC)) to determine from the captured images an illumination region corresponding to the item of interest's size, shape, and position. The processor 62 is typically configured by a software program stored in computer readable memory (*e.g.,* read only memory (ROM), flash memory, random access memory (RAM), and/or a hard-drive) to recognized an item's edges (*e.g.,* edge detection). From this edge information, the area needed for illumination (*i.e.,* illumination region) may be calculated by the processor 62 and stored in memory 64. The processor may then transmit signals corresponding to the illumination region to the illumination subsystem 40 via the bus 90.

The illumination subsystem 40 generates and shapes the beam of light for TOF dimensioning. The light beam is generated by a light source 20 (*e.g.,* laser diode or LED). An optical subassembly 25 focuses the beam using an optical element (*e.g.,* lens or DOE). The spatial extent of the light beam is adjusted to match the illumination region that corresponds to the item of interest using an adjustable aperture 30 *(e.g.,* LCD, LCoS, or DMD).

A TOF sensor subsystem 45 is positioned and configured for capturing and focusing the reflected light using a TOF lens 46. A TOF sensor 47 converts the collected light into an electronic signal. This electronic signal is then processed by a TOF digital signal processor 48 (*e.g.,* DSP) to produce a range image. The range image conveys range (*e.g.,* via a gray scale value) between the TOF sensor 45 and the item of interest 2 at various points on the item of interest. The range image is transmitted from the TOF sensor subsystem to the processor 62 via the bus 90. The processor is configured to determine from the range images an (at least) approximate dimension measurement of the item of interest.

The TOF dimensioning system may also include a user interface 70 to provide a user with dimension measurements (*e.g.,* linear dimension or volume) results. In some embodiments, the user interface 70 may also facilitate the identification of the item of interest by providing an interface to allow user input (*e.g.,* selecting the item of interest) .

The TOF dimensioning system may also include a communication subsystem 80 for transmitting and receiving information from a separate computing device or storage device. This communication subsystem may be wired or wireless and may enable communication with a variety of protocols (e.g., IEEE 802.11, including WI-FI®, BLUETOOTH®, CDMA, TDMA, or GSM).

The illumination subsystem 40, the TOF sensor subsystem 45, the imager 50, the control subsystem 60, the user interface 70, and the communication subsystem 80 are electrically connected via a couplers (*e.g.,* wires or fibers), buses, and control lines to form an interconnection system 90. The interconnection system 90 may include power buses or lines, data buses, instruction buses, address buses, etc., which allow operation of the subsystems and interaction there between.

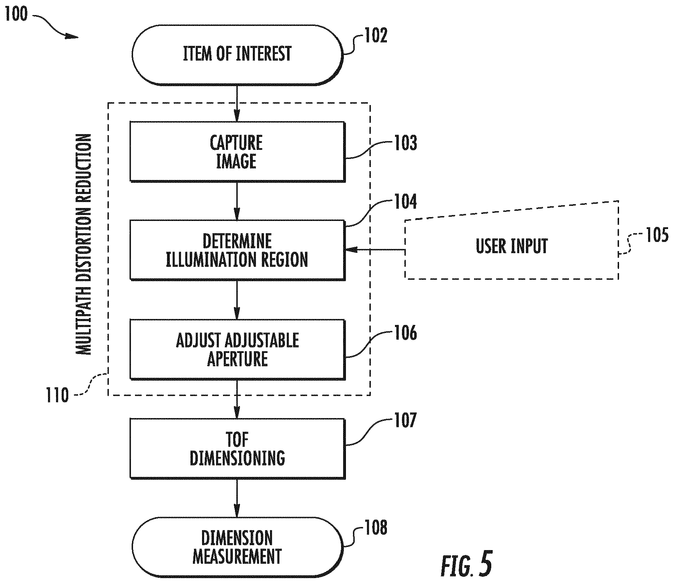

Figure 5 schematically depicts a flowchart illustrating an exemplary method for time-of-flight dimensioning 100. The method illustrated includes the steps for reducing multipath distortion 110. First, an item of interest 102 for dimensioning is placed in the field of view of the TOF dimensioning system. An image of the item of interest is then captured 103. From this image, the illumination region may be determined 104. Here, a user input 105 may also facilitate this determination. The illumination region corresponds (*e.g.,* matches) the item of interest's physical edges. The adjustable aperture is adjusted 106 so the light beam illuminates the illumination region substantially without first being reflected. The light reflected back to the TOF dimension system from the item of interest is used to perform the step TOF dimensioning 107. From this step, a dimension measurement (*e.g.,* volume) is obtained 108.

.

In the specification and/or figures, typical embodiments of the invention have been disclosed. The present invention is not limited to such exemplary embodiments. The use of the term "and/or" includes any and all combinations of one or more of the associated listed items. The figures are schematic representations and so are not necessarily drawn to scale. Unless otherwise noted, specific terms have been used in a generic and descriptive sense and not for purposes of limitation.

## Claims

1. A time-of-flight (TOF) dimensioning system, comprising:
a light source to generate light;
an optical subassembly positioned in front of the light source and configured to project a light beam along an optical axis toward an item of interest;
an adjustable aperture positioned along the optical axis between the optical subassembly and the item of interest, the adjustable aperture comprising a blocking region for blocking at least a portion of the light beam, the blocking region having a controllable size, shape, and position.
an imager positioned and configured for capturing images of the item of interest; and
a control subsystem communicatively coupled to the adjustable aperture and the imager, the control subsystem configured (*i*) to determine from the captured images an illumination region corresponding to the item of interest's size, shape, and position and (*ii*) to control the adjustable aperture's blocking region to limit illumination to the illumination region so that light from the light source substantially reaches the item of interest without first being reflected.

2. The time-of-flight (TOF) dimensioning system according to claim 1, wherein the light source comprises a laser.

3. The time-of-flight (TOF) dimensioning system according to claim 1, wherein the light source comprises a light emitting diode (LED).

4. The time-of-flight (TOF) dimensioning system according to claim 1, wherein the optical subassembly comprises a lens.

5. The time-of-flight (TOF) dimensioning system according to claim 1, wherein the optical subassembly comprises a diffractive optical element (DOE).

6. The time-of-flight (TOF) dimensioning system according to claim 1, wherein the adjustable aperture comprises a liquid crystal display (LCD) screen.

7. The time-of-flight (TOF) dimensioning system according to claim 1, wherein the adjustable aperture comprises a liquid-crystal-on-silicon (LCoS) projector.

8. The time-of-flight (TOF) dimensioning system according to claim 1, wherein the adjustable aperture comprises a digital micro-mirror device (DMD).

9. The time-of-flight (TOF) dimensioning system according to claim 1, wherein the imager comprises a charge-coupled device (CCD) image sensor and a lens.

10. The time-of-flight (TOF) dimensioning system according to claim 1, wherein the imager comprises a complementary metal-oxide-semiconductor (CMOS) image sensor and a lens.

11. A method for reducing multipath distortion in a time-of-flight (TOF) dimensioning system, the method comprising:
capturing an image of an item of interest;
determining from the image an illumination region corresponding to the size, shape, and/or position of the item of interest; and
adjusting an adjustable aperture positioned in front of a light source to limit a spatial extend of a light beam directed at the item of interest (i) to substantially limit illumination to the illumination region and (ii) to substantially reach the item of interest without first being reflected.

12. The method according to claim 11, wherein the image is a color image representing visible light.

13. The method according to claim 11, wherein the determining step comprises identifying in the image's pixel values discontinuities comprising the edges of the item of interest.

14. The method according to claim 11, wherein the determining step comprises prompting a user to select an item of interest from the image.

## Patentansprüche

1. Flugzeit- bzw. TOF-Dimensionierungssystem, umfassend:
eine Lichtquelle zum Erzeugen von Licht;
eine optische Unterbaugruppe, positioniert vor der Lichtquelle und konfiguriert zum Projizieren eines Lichtstrahls entlang einer optischen Achse hin zu einem interessierenden Gegenstand;
eine anpassbare Blende, positioniert entlang der optischen Achse zwischen der optischen Unterbaugruppe und dem interessierenden Gegenstand, die anpassbare Blende umfassend eine Blockierungsregion zum Blockieren mindestens eines Anteils des Lichtstrahls, wobei die Blockierungsregion eine steuerbare Größe, Form und Position aufweist,
einen Imager, positioniert und konfiguriert zum Erfassen von Bildern des interessierenden Gegenstands; und
ein Steuerungsuntersystem, kommunikativ an die anpassbare Blende und den Imager gekoppelt, das Steuerungsuntersystem konfiguriert (*i*) zum Bestimmen, aus den erfassten Bildern, einer Beleuchtungsregion korrespondierend mit der Größe, Form und Position des interessierenden Gegenstands, und (*ii)* zum Steuern der Blockierungsregion der anpassbaren Blende zum Begrenzen der Beleuchtung zu der Beleuchtungsregion, so dass Licht von der Lichtquelle den interessierenden Gegenstand im Wesentlichen erreicht, ohne zuerst reflektiert zu werden.

2. Flugzeit- bzw. TOF-Dimensionierungssystem nach Anspruch 1, wobei die Lichtquelle einen Laser umfasst.

3. Flugzeit- bzw. TOF-Dimensionierungssystem nach Anspruch 1, wobei die Lichtquelle eine Licht abgebende Diode (LED) umfasst.

4. Flugzeit- bzw. TOF-Dimensionierungssystem nach Anspruch 1, wobei die optische Unterbaugruppe eine Linse umfasst.

5. Flugzeit- bzw. TOF-Dimensionierungssystem nach Anspruch 1, wobei die optische Unterbaugruppe ein diffraktives optisches Element (DOE) umfasst.

6. Flugzeit- bzw. TOF-Dimensionierungssystem nach Anspruch 1, wobei die anpassbare Blende einen Flüssigkristallanzeige- bzw. LCD-Bildschirm umfasst.

7. Flugzeit- bzw. TOF-Dimensionierungssystem nach Anspruch 1, wobei die anpassbare Blende einen Flüssigkristall-auf-Silicium- bzw. LCoS-Projektor umfasst.

8. Flugzeit- bzw. TOF-Dimensionierungssystem nach Anspruch 1, wobei die anpassbare Blende eine digitale Mikrospiegelvorrichtung (DMD) umfasst.

9. Flugzeit- bzw. TOF-Dimensionierungssystem nach Anspruch 1, wobei der Imager einen Ladungsspeicherbaustein- bzw. CCD-Bildsensor und eine Linse umfasst.

10. Flugzeit- bzw. TOF-Dimensionierungssystem nach Anspruch 1, wobei der Imager einen komplementären Metalloxidhalbleiter- bzw. CMOS-Bildsensor und eine Linse umfasst.

11. Verfahren zum Reduzieren von Mehrwegverzerrung in einem Flugzeit- bzw. TOF-Dimensionierungssystem, das Verfahren umfassend:
Erfassen eines Bilds eines interessierenden Gegenstands;
Bestimmen, aus dem Bild, einer Beleuchtungsregion korrespondierend mit der Größe, Form und/oder Position des interessierenden Gegenstands; und
Anpassen einer anpassbaren Blende, positioniert vor einer Lichtquelle, zum Begrenzen eines räumlichen Ausmaßes eines auf den interessierenden Gegenstand gerichteten Lichtstrahls, um (i) die Beleuchtung im Wesentlichen auf die Beleuchtungsregion zu begrenzen und (ii) den interessierenden Gegenstand im Wesentlichen zu erreichen, ohne zuerst reflektiert zu werden.

12. Verfahren nach Anspruch 11, wobei das Bild ein Farbbild ist, das sichtbares Licht repräsentiert.

13. Verfahren nach Anspruch 11, wobei der Schritt des Bestimmens umfasst, in den Bildpunktwerten des Bilds Diskontinuitäten zu identifizieren, die die Kanten des interessierenden Gegenstands umfassen.

14. Verfahren nach Anspruch 11, wobei der Schritt des Bestimmens umfasst, einen Benutzer aufzufordern, einen interessierenden Gegenstand aus dem Bild auszuwählen.

## Revendications

1. Système de dimensionnement par temps de vol (TOF), comprenant :
une source de lumière destinée à générer de la lumière ;
un sous-ensemble optique placé devant la source de lumière et configuré pour projeter un faisceau de lumière suivant un axe optique en direction d'un élément d'intérêt ;
une ouverture ajustable placée suivant l'axe optique entre le sous-ensemble optique et l'élément d'intérêt, l'ouverture ajustable comprenant une région de blocage destinée à bloquer au moins une partie du faisceau de lumière, la région de blocage présentant une taille, une forme et une position réglables ;
un imageur placé et configuré de manière à capturer des images de l'élément d'intérêt ; et
un sous-système de réglage relié en communication à l'ouverture ajustable et à l'imageur, le sous-système de réglage étant configuré (i) pour déterminer, à partir des images capturées, une région d'éclairage correspondant à la taille, à la forme et à la position de l'élément d'intérêt, et (ii) pour régler la région de blocage de l'ouverture ajustable pour restreindre l'éclairage à la région d'éclairage de façon à ce que la lumière émanant de la source de lumière atteigne sensiblement l'élément d'intérêt sans être préalablement réfléchie.

2. Système de dimensionnement par temps de vol (TOF) selon la revendication 1, dans lequel la source de lumière comprend un laser.

3. Système de dimensionnement par temps de vol (TOF) selon la revendication 1, dans lequel la source de lumière comprend une diode électroluminescente (LED) .

4. Système de dimensionnement par temps de vol (TOF) selon la revendication 1, dans lequel le sous-ensemble optique comprend une lentille.

5. Système de dimensionnement par temps de vol (TOF) selon la revendication 1, dans lequel le sous-ensemble optique comprend un élément optique diffractif (DOE) .

6. Système de dimensionnement par temps de vol (TOF) selon la revendication 1, dans lequel l'ouverture ajustable comprend un écran d'affichage à cristaux liquides (LCD).

7. Système de dimensionnement par temps de vol (TOF) selon la revendication 1, dans lequel l'ouverture ajustable comprend un projecteur à cristaux liquides sur silicium (LCoS).

8. Système de dimensionnement par temps de vol (TOF) selon la revendication 1, dans lequel l'ouverture ajustable comprend une matrice à micromiroirs (DMD).

9. Système de dimensionnement par temps de vol (TOF) selon la revendication 1, dans lequel l'imageur comprend un capteur d'images à dispositif à couplage de charge (CCD) et une lentille.

10. Système de dimensionnement par temps de vol (TOF) selon la revendication 1, dans lequel l'imageur comprend un capteur d'images à semiconducteur à oxyde de métal complémentaire (CMOS) et une lentille.

11. Procédé de réduction de la distorsion due aux trajets multiples dans un système de dimensionnement par temps de vol (TOF), le procédé comprenant les étapes suivantes :
capture d'une image d'un élément d'intérêt ;
détermination, à partir de l'image, d'une région d'éclairage correspondant à la taille, à la forme et/ou à la position de l'élément d'intérêt ; et
ajustement d'une ouverture ajustable placée devant une source de lumière pour restreindre une étendue spatiale d'un faisceau de lumière dirigé sur l'élément d'intérêt (i) pour restreindre sensiblement l'éclairage à la région d'éclairage et (ii) pour atteindre sensiblement l'élément d'intérêt sans réflexion préalable.

12. Procédé selon la revendication 11, dans lequel l'image est une image couleur représentant de la lumière visible.

13. Procédé selon la revendication 11, dans lequel l'étape de détermination comprend l'identification, dans les valeurs de pixels de l'image, de discontinuités comprenant les bords de l'élément d'intérêt.

14. Procédé selon la revendication 11, dans lequel l'étape de détermination comprend l'invite faite à un utilisateur de sélectionner un élément d'intérêt à partir de l'image.
